# EUROPEAN PATENT APPLICATION

(11) **EP 0 549 241 A2**
(43) Date of publication of application: **30.06.1993**
(21) Application number: 92311452.4
(22) Date of filing: 15.12.1992
(51) Int. Cl.: H02K 1/24

(54) **Electrical machines**

(30) Priority: 24.12.1991 US 813001
(71) Applicant: GENERAL ELECTRIC COMPANY, Schenectady, NY 12345 (US)
(72) Inventor: Shah, Manoj Ramprasad, Latham, New York 12110 (US)
(74) Representative: Pratt, Richard Wilson

(57) **Abstract**

A method of improving operational characteristics of a generator is provided which includes the steps of a) providing a stator having a substantially cylindrical interior surface; b) providing a rotor for rotation within the stator, the rotor having at least a pair of pole pieces, each having a longitudinal pole axis and a radially outer surface which defines a gap between the stator and the rotor; and c) shaping the radially outer surface to obtain minimum harmonics at a predetermined generator load. A generator constructed by the above method is also disclosed.

## Description

The present invention relates to Electrical Machines.

An embodiment of this invention relates to the rotor of a generator/motor and specifically, to a rotor for a salient-pole generator (motor) which minimizes the harmonic content of the air gap flux.

When the air gap magnetic flux distribution at a specific load point for a generator (motor) is compared to that at no load, a significant increase in the amplitudes of the dominant harmonics is observed at the load point, even for well designed generator/motors. This may lead to undesirable increases in voltage harmonics, stator teeth core losses and induced (magnetostrictive and other) noise. These adverse effects may become particularly pronounced when the generator (motor) is supplying power to, or receiving power from an inadequately filtered power conditioning device such as a load commuted interverter (LCI) or a cyclo-converter (CCV). It has been determined in accordance with this invention, that it is very desirable to have the generator (motor) rotor designed at a specific load point such that its contribution of harmonics is minimum at that load point, rather than designing for the no load condition.

A conventional salient-pole generator (motor) rotor is geometrically symmetrical about each pole axis. This configuration in magnetically optimum for the generator operating at no load, since the magnetic field and geometrical axes coincide. Under load conditions, however, these axes do not coincide and, as a consequence, the rotor magnetic field distribution is no longer symmetrical about each pole axis. This causes the rotor to saturate (magnetically) non-uniformly, due to the non-linear magnetization characteristics of the pole material.

Round rotor generators, in which the rotor is made asymmetrical by displacing the first few rotor slots on the trailing (or leading) edge of a pole inwards towards the pole axis, are known, see for example U.S. Patent Nos. 4,902,941 and 3,634,707. On the other hand, we are unaware of any prior attempts to reshape the rotor geometry of a salient-pole machine for a specific load point.

Accordingly, it is the principal objective of this invention to minimize the harmonic content of the air gap flux at a specified load point rather than at no load. This optimized design will (1) reduce voltage harmonics, (2) reduce stator teeth core loss, and (3) reduce electromagnetic stimuli that generate structure-borne and airborne noise at the rated load point in particular, and over the entire load range in general.

As earlier mentioned, significant benefits are realized if the harmonic content of the air gap flux is reduced. Since the stator should be symmetrical to house the most compact and effective multi-phase armature windings, the emphasis for purposes of this invention necessarily shifts to the air gap and the rotor configuration. In the conventional salient-pole generator, the rotor pole is symmetrically shaped to have a minimum air gap at the pole center. The air gap is gradually increased symmetrically (up to 50%) at the pole edges on either side of the pole axis. This helps improve the form factor of the magnetic flux distribution due to the rotor winding only.

In accordance with one aspect of the present invention, the entire rotor pole is reshaped such that the resulting magnetic field distribution has aminimum harmonic content when the effects of both the rotor winding current and the armature winding current are taken into account simultaneously, i.e. the harmonic content is minimized at a specific load point rather than at no load.

In one exemplary embodiment, the exterior surface of the rotor pole piece which forms an air gap with the associated stator, is reshaped so that the air gap at the trailing edge of the pole piece in larger than the air gap at the leading edge of the pole piece. It should be understood, however, that the final shape of the pole piece is not limited to any specific asymmetrical configuration. Rather, the shape of the pole piece will be determined as a function of minimum harmonics at a predetermined load point of the generator (motor). In other words, the specific embodiment disclosed in this application is for illustrative purposes only.

According to another aspect of the invention, there is provided a method of improving operational characteristics of a generator (motor) comprising the steps of a) providing a stator having a substantially cylindrical interior surface; b) providing a rotor for rotation within the stator, the rotor having at least a pair of pole pieces, each having a longitudinal pole axis and an exterior surface which defines an air, or magnetic flux, gap between the stator and the rotor; and c) shaping the exterior surface to obtain minimum harmonics at a predetermined generator load.

In yet another aspect, the invention provides a generator comprising a substantially cylindrical stator surface and a multi-pole rotor arranged to rotate within the stator; the multi-pole rotor comprising a plurality of pole pieces, each extending along a corresponding pole axis, and each pole piece having an external surface adjacent the stator surface to define a magnetic flux gap therebetween; the external surface shaped as a function of harmonic flux density at a loaded condition of the generator.

A better understanding of the present invention will become apparent from the illustrative description of the accompanying drawings in which:
FIGURE 1 is a partial radial peripheral cross sectional view of a conventional salient-pole machine; and
FIGURE 2 illustrates a salient-pole generator in accordance with this invention where the leading edge of the rotor pole is incrementally extended into the air gap and the trailing edge is depressed radially.

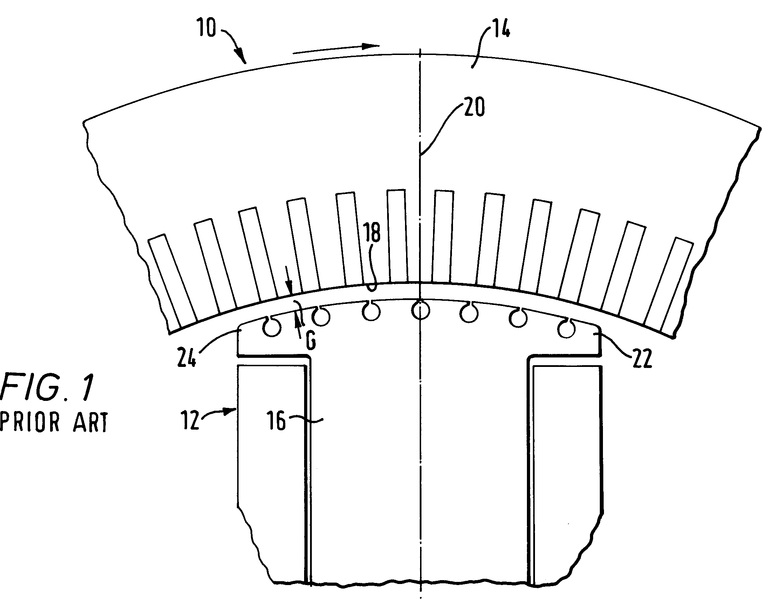

With reference to Figure 1, a partial axial view is shown of a known four pole generator 10 having a rotor 12 and a stator 14 arranged to produce an air gap G between the pole piece 16 (one shown) and the stator 14, the inner surface 18 of which, is substantially cylindrical. As will be appreciated, the rotor 12 is geometrically symmetrical about its pole axis 20 with minimum gap at the pole center and increasing (up to 50%) toward both leading and trailing edges 22, 24, respectively. This configuration is magnetically optimum for the generator operating at no load, where the magnetic field and geometrical axes coincide.

Under load conditions, however, it has been determined that the magnetic field axes and geometrical axes do not coincide and as a result, the rotor magnetic field distribution is no longer symmetrical about its pole axis. This causes the rotor to saturate (magnetically) and non-uniformly due to the non-linear magnetization characteristics of the pole material. By way of example, for an over-excited generator operation under load, the trailing edge of a rotor pole saturates more as it carries more flux than its leading edge.

For a specific generator if, for example, the fundamental (first harmonic) voltage is taken as 1.0 per unit, the r.m.s. value of the generated voltage wave is calculated to be 1.4 p.u. at no load. Here, 1.14 = (1 + .55²)^{.5},where 0.55 p.u. is the r.m.s. value of all the harmonics except the fundamental. The corresponding r.m.s. number increases from 1.14 to 1.31 p.u. at rated load.

In accordance with this invention, it has been determined that it is possible to reshape the rotor poles such that the resulting magnetic field distribution has minimum harmonic content when the effects of both the rotor winding current and the armature winding current are taken into account simultaneously.

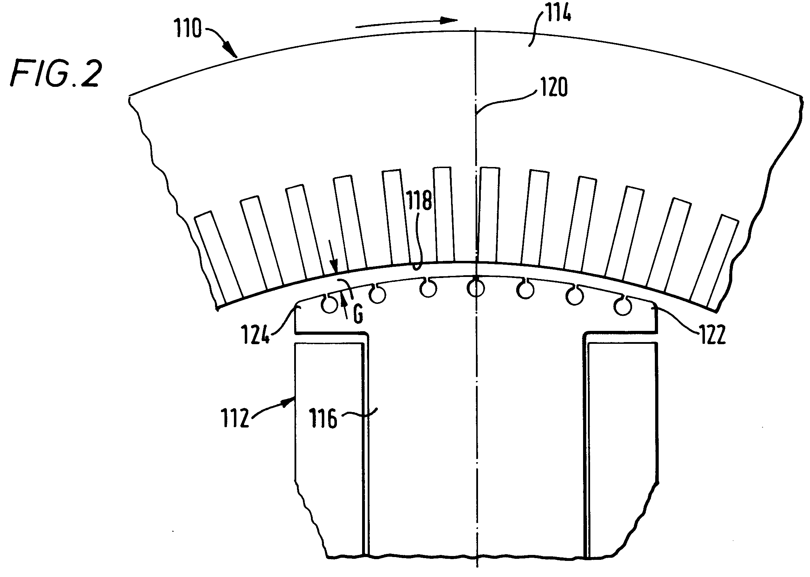

With reference to Figure 2, a salient-pole generator is shown with reference numerals as in Figure 1, but with the prefix "1" added, used to indicate corresponding elements. Thus, the form pole generator 110 includes a rotor 112 and a stator 114 arranged to form the air gap G between pole piece 116 and the stator 114. Again, the inner surface 118 of the stator is substantially cylindrical.

In accordance with this exemplary embodiment, however, the exterior surface of pole piece 116 is not symmetrical with respect to pole axis 120. Rather, the gap in the leading edge area 122 is smaller than the gap in the trading edge area 124.

This peripherally skewed pole configuration forces the magnetic flux densities to be more uniform in the rotor pole surface which, in turn, makes the air gap flux density distribution more sinusoidal. For purposes of illustration only, a generator as shown was subjected to an over-excited load condition to show the potential benefits of the subject invention. The comparable harmonic values are 1.27 p.u. (0.79 p.u. harmonics only). For this exemplary embodiment, relating to asymmetrical shaping of the pole face, the total harmonic flux density level was reduced from 19.2% to 13.8%, an approximate 28% reduction in flux density.

It is to be understood that this invention is not limited to any specific air gap shape or configuration. The invention lies in the realization that flux density can be minimized at load rather than no load conditions, and that this minimization can be achieved by alteration of pole shape until optimized for a given load, e.g., rated load of the generator (motor).

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the invention.

## Claims

1. A method of improving operational characteristics of a generator comprising the steps of:
a) providing a stator having a substantially cylindrical interior surface;
b) providing a rotor for rotation within the stator, the rotor having at least a pair of pole pieces, each having a longitudinal pole axis and an outside surface which defines a gap between the stator and the rotor; and
c) shaping said exterior surface to obtain minimum harmonics at a predetermined generator load.

2. The method of claim 1 wherein said shape is asymmetrical relative to said pole axis.

3. The method of claim 2 wherein said pole piece outside surface has a leading edge and a trailing edge, wherein, during step (c), said gap is made larger at said trailing edge than at said leading edge.

4. The method of claim 3 wherein said gap at said pole axis is smaller than at said trailing edge and larger than at said leading edge.

5. The method of claim 1 wherein said generator is a salient-pole generator.

6. The method of claim 1 wherein said predetermined load is the rated generator load.
b) providing a rotor for rotation within the stator, the rotor having at least a pair of pole pieces, each having a longitudinal pole axis and a radially outer surface which defines a gap between the stator and the rotor; and
c) shaping said exterior surface to obtain minimum harmonics at a rated load of the generator load; wherein said pole piece outer surface has a leading edge and a trailing edge, and wherein, during step (c), said gap is made larger at said trailing edge than at said leading edge.

7. A generator comprising a substantially cylindrical stator surface and a multi-pole rotor arranged to rotate within said stator; said multi-pole rotor comprising a plurality of pole pieces, each extending along a corresponding pole axis, and each pole piece having a radially outer surface adjacent said stator surface to define a magnetic flux gap therebetween; said outer surface shaped as a function of harmonic flux density at a loaded condition of the generator.

8. The generator of claim 7 wherein said generator is a four-pole, salient-pole generator.

9. The generator of claim 7 wherein said shape is asymmetrical relative to said pole axis.

10. The generator of claim 7 wherein said pole piece outer surface has a leading edge and a trailing edge, and wherein said gap is larger at said trailing edge than at said leading edge.
